# EUROPÄISCHE PATENTSCHRIFT

(11) **EP 1 203 174 B1**
(45) Veröffentlichungstag und Bekanntmachung des Hinweises auf die Patenterteilung: **23.04.2003**
(21) Anmeldenummer: 00949392.5
(22) Anmeldetag: 21.07.2000
(51) Int. Cl.: F16H 41/24, F16D 3/76, F16F 15/126

(54) **DREHMOMENTWANDLERANBINDUNG**
TORQUE CONVERTER COUPLING
ACCOUPLEMENT DU CONVERTISSEUR DE COUPLE

(30) Priorität: 20.08.1999 DE 19939527
(43) Veröffentlichungstag der Anmeldung: 08.05.2002
(73) Patentinhaber: Bayerische Motoren Werke Aktiengesellschaft, 80788 München (DE); ZF Sachs AG, 97424 Schweinfurt (DE); ZF Friedrichshafen AG, 88046 Friedrichshafen (DE)
(72) Erfinder: NEUNER, Josef, D-83064 Raubling (DE); GOLLMER, Roland, D-85221 Dachau (DE); HODERMANN, Karl-Heinz, D-85375 Neufahrn (DE); NOACK, Marco, D-85716 Unterschleissheim (DE); WALK, Renate, D-88682 Salem (DE); KUNDERMANN, Wolfgang, D-97422 Schweinfurt (DE)
(86) Internationale Anmeldenummer: EP0007017
(87) Internationale Veröffentlichungsnummer: WO01014768

(56) Entgegenhaltungen:
- EP-A- 0 431 242
- DE-A- 3 809 797
- DE-A- 3 822 637
- DE-A- 19 747 962
- DE-A- 19 848 253
- DE-U- 7 725 998
- FR-A- 2 150 000

## Beschreibung

Die Erfindung betrifft eine Drehmomentwandleranbindung an eine Kurbelwelle im Antriebsstrang eines Kraftfahrzeugs, nach dem Oberbegriff des Hauptanspruchs.

### [Stand der Technik]

Es ist bereits bekannt, im Antriebsstrang eines Kraftfahrzeugs eine Antriebsverbindung zur Drehmomentübertragung durch eine mit Längsverzahnungen versehene Wellen-Nabenverbindung für lösbares Verbinden einer Kurbelwelle mit einem gleichachsig angeordneten hydrodynamischen Drehmomentwandler vorzusehen, wobei die Längsverzahnungen der Wellen-Nabenverbindung in Längsrichtung der Zähne sich vergrößernde bzw. verkleinernde Zahnquerschnitte besitzen. Die gattungsgemäße DE 197 47 962 A1 beschreibt eine solche Antriebsverbindung zur Drehmomentübertragung. Es hat sich gezeigt, daß aufgrund der Erfordernis der Selbsthemmung der Antriebsverbindung gegenüber Lösekräften bei Drehmomentübertragung, die Zahnflanken der sich vergrößernden bzw. verkleinernden Zahnquerschnitte der Zähne sehr genau gearbeitet sein müssen, was aufwendige Fertigungsarbeiten bedingt. Außerdem entsteht durch Fluchtungsfehler zwischen Drehmomentwandler und Kurbelwelle ein schlechtes Tragbild der Zahnflanken, was grundsätzlich nachteilig ist bei der Drehmomentübertragung.

Aus der DE 38 22 637 A1 ist eine drehelastische Wellen-Nabenverbindung bekannt, bei der auf die Außenseite der Wellenverzahnung oder auf die Innenseite der Nabenverzahnung eine Gummischicht aufvulkanisiert ist.

Aus der DE 77 25 998 U1 ist eine drehelastische Kupplung bekannt, bei der zwischen zwei konzentrisch ineinander liegenden Kupplungsteilen ein ringförmiges, elastisches verformbares Druckkissen angeordnet ist.

### [Aufgabe der Erfindung]

Deshalb ist es Aufgabe der Erfindung, eine lösbare Verbindung zwischen einem Drehmomentwandler und einer Kurbelwelle bereitzustellen, die einfach hergestellt werden kann und die bei Spielfreiheit Fluchtungsfehler ausgleicht.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist im Antriebsstrang eines Kraftfahrzeugs eine Antriebsverbindung zur Drehmomentübertragung durch eine mit Längsverzahnungen versehene Wellen-Nabenverbindung für lösbares Verbinden einer Kurbelwelle mit einem gleichachsig angeordneten hydrodynamischen Drehmomentwandler vorgesehen, wobei die Längsverzahnungen der Wellen-Nabenverbindung in Längsrichtung der Zähne sich vergrößernde bzw. verkleinernde Zahnquerschnitte besitzen. Die Antriebsverbindung ist dadurch gekennzeichnet, daß sich wenigstens zwischen den das Drehmoment übertragenden Zahnflanken von Welle und Nabe eine Elastomerschicht befindet.

Eine solche Längsverzahnung mit einer Elastomerschicht zwischen Welle und Nabe hat den Vorteil, daß bei axialer Vorspannung, auch beim Auftreten von Fluchtungsfehlern zwischen Kurbelwelle und Drehmomentwandler, Spielfreiheit entsteht. Außerdem wird bei einer Verbindung zwischen einer Kurbelwelle und einem gleichachsig angeordneten hydrodynamischen Drehmomentwandler durch eine solche Wellen-Nabenverbindung ein gutes Tragbild erzielt, auch bei Fremdzentrierung.

Bei einer bevorzugten Ausführung der Erfindung ist die Elastomerschicht auf der Wellenverzahnung und/oder auf der Nabenverzahnung aufgebracht. Das hat den Vorteil, daß die Wellen-/Nabenverbindung einfach hergestellt werden kann, insbesondere, wenn die Elastomerschicht auf die Verzahnung aufvulkanisiert wird.

Eine vorteilhaft preiswerte Variante der Antriebsverbindung ist dadurch gekennzeichnet, daß die Längsverzahnungen der Wellen-Nabenverbindung aus Blech geformt sind.

Werden die in Längsrichtung der Zähne sich vergrößernden bzw. verkleinernden Zahnquerschnitte über eine solche Zahnbreitenänderung der Längsverzahnungen der Wellen-Nabenverbindung erreicht, die bei Drehmomentübertragung bezüglich einer Lösekraft selbsthemmend ist, ist, bedingt durch den hohen Reibwert zwischen Elastomer und Stahl, eine relativ große Zahnquerschnittsänderung möglich. Das ergibt Spielfreiheit, auch bei kleinen Axialtoleranzen. Vorzugsweise kann ein Keilwinkel der sich verbreiternden bzw. verschmälernden Zähne von 8 Grad bis 15 Grad vorgesehen werden.

Bei einer weiteren vorteilhaften Ausführung der Erfindung wird zur axialen Festlegung der Wellen-Nabenverbindung eine Axialkraft verwendet, die durch einen Wandlerinnendruck beim Betrieb des Wandlers entsteht.

Eine solche Ausführung hat den Vorteil, daß keine weiteren Maßnahmen zur axialen Sicherung der Wellen-Nabenverbindung unternommen werden müssen. Die aufgrund des Drehmomentwandlerbetriebs entstehende Axialkraft in Richtung der Kurbelwelle preßt die konischen Längsverzahnungen aufgrund der Elastomerschicht spielfrei ineinander.

Zusätzlich können, zur axialen Festlegung der Wellen-Nabenverbindung, Welle und Nabe noch formschlüssig miteinander verbunden werden. Dies sichert die Verbindung zwischen Kurbelwelle und Drehmomentwandler auch dann, wenn der Drehmomentwandler nicht in Betrieb ist und somit kein Wandlerinnendruck vorhanden ist. Solche formschlüssige Verbindungen von Welle und Nabe werden durch bekannte Maschinenelemente erreicht, wie zum Beispiel durch eine in einer Umfangsnut der Nabe angebrachte Spannfeder oder durch in radialer Richtung in die Nabe eingedrehte und durch diese hindurchragende Schrauben.

Ein bevorzugtes Ausführungsbeispiel der Erfindung beschreibt die nachfolgende Beschreibung mit der zugehörigen Zeichnung.

### Es zeigen:

### [Beispiele]

- Figur 1: die Anbindung einer Kurbelwelle an einen Drehmomentwandler gemäß der Erfindung in einem Teilschnitt und
- Figur 2: einen Querschnitt des Anschlusses der Kurbelwelle an den Drehmomentwandler aus Figur 1 im Bereich der Verzahnung.

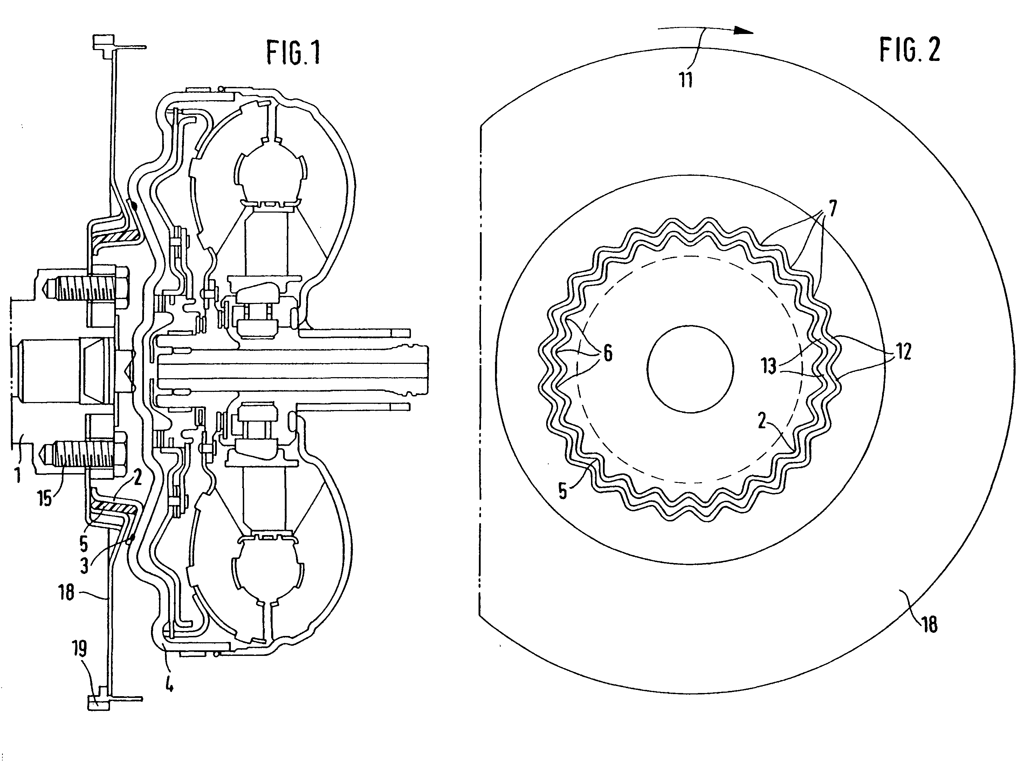

Figur 1 zeigt einen Endabschnitt einer Kurbelwelle 1, mit einem durch Schrauben 15 befestigten Trägerblech 18 für einen Anlasserzahnkranz 19. Das Trägerblech 18 ist bei einem bestimmten Durchmesserbereich als längsverzahnte Nabe ausgebildet, die mit einem als längsverzahnte Welle ausgebildeten Antriebsflansch 2 eines hydrodynamischen Drehmomentwandlers eine lösbare Antriebsverbindung bildet, indem Nabe und Welle formschlüssig ineinander eingreifen.

Der Antriebsflansch 2 ist durch eine Schweißnaht 3 fest mit einem Gehäuse 4 des Drehmomentwandlers verbunden. Antriebsflansch 2 und Trägerblech 18 sind aus Blech gefertigt. Ihre Längsverzahnungen besitzen in Längsrichtung der Zähne 6,7 (Figur 2) sich vergrößernde bzw. verkleinernde Zahnquerschnitte. Zwischen den Zähnen 6,7 befindet sich eine Elastomerschicht 5, die entweder an das Trägerblech 18 oder an den Antriebsflansch 2 anvulkanisiert ist.

Das Gehäuse 4 ist bezüglich der Kurbelwelle 1 axial verschiebbar. Aufgrund dessen verschiebt der beim Betrieb des Drehmomentwandlers entstehende Wandlerinnendruck das Gehäuse 4 mit dem Antriebsflansch 2 in Richtung der Kurbelwelle 1 und zwar bis die Wellen-Nabenverbindung aufgrund der sich vergrößernden bzw. verkleinernden Zahnquerschnitte an Welle bzw. Nabe und aufgrund der Elastomerschicht 5 spielfrei ist. Das bedeutet, daß der Antriebsflansch 2 von der Kurbelwelle 1 in axialer Richtung über die Längsverzahnung abgestützt wird.

Figur 2 zeigt einen Querschnitt durch die Längsverzahnungen des Trägerblechs 18 als Nabe und des Antriebsflanschs 2 als Welle. Sie sind aus Blech geformt und werden durch Ineinanderschieben von Kurbelwelle 1 und Antriebsflansch 2 formschlüssig miteinander verbunden. Die Elastomerschicht 5 befindet sich zwischen den Zähnen 6,7 der Verzahnung des Trägerblechs 18 und der des Antriebsflanschs 2. Dreht sich die Kurbelwelle 1 in der durch den Pfeil 11 gekennzeichneten Richtung und wird Drehmoment von dem Trägerblech 18 auf den Antriebsflansch 2 übertragen, erfolgt die Kraftübertragung über die Zahnflanken 12 der Zähne 7 und die Elastomerschicht 5 auf die Zahnflanken 13 der Zähne 6. Aufgrund der sich in Längsrichtung der Zähne 6,7 vergrößernden bzw. verkleinernden Zahnquerschnitte, der Elastomerschicht 5 und aufgrund des Wandlerinnendrucks, der den Antriebsflansch 2 axial in Richtung der Kurbelwelle 1 belastet, entsteht Spielfreiheit an den kraftübertragenden Zahnflanken 12,13 der lösbaren Antriebsverbindung. Selbst bei Belastungsstößen bzw. -schwankungen ist durch die Axialkraft aus dem Wandlerinnendruck gewährleistet, daß eine Trennung der Zahnflanken 12 des Trägerblechs 18 und der Zahnflanken 13 des Antriebsflansches 2 verhindert wird.

## Patentansprüche

1. Antriebsverbindung zur Drehmomentübertragung im Antriebsstrang eines Kraftfahrzeuges zwischen einer Kurbelwelle (1) und einem Antriebsflansch (2) eines gleichachsig mit der Kurbellwelle (1) angeordneten, gegenüber dieser axial verschiebbaren Gehäuses (4) eines hydrodynamischen Drehmomentwandlers, ausgebildet mit Längsverzahnungen, deren Zähne (6, 7) über sich in Längsrichtung vergrößernde bzw. verkleinernde Zahnquerschnitte verfügen und die durch eine durch den Wandlerinnendruck erzeugte Axialkraft in Axialrichtung spielfrei ineinander gedrückt werden,
**dadurch gekennzeichnet, dass**
die der Kurbelwelle (1) zugeordnete, mit Zähnen (7) ausgebildete Längsverzahnung an einer Nabe eines an der Kurbelwelle (1) befestigten Trägerbleches (18) auf einem bestimmten Durchmesser desselben vorgesehen ist, während die dem Gehäuse (4) des hydrodynamischen Drehmomentwandlers zugeordnete, mit Zähnen (6) versehene Längsverzahnung am Antriebsflansch (2) ausgebildet ist, und zwischen den Zahnflanken (12) der Zähne (7), die der Kurbelwelle (1) zugeordnet sind, und den Zahnflanken (13) der Zähne (6), die dem Gehäuse (4) zugeordnet sind, eine kraftübertragende, zur Spielfreiheit beitragende Elastomerschicht (5) am Trägerblech (18) oder am Antriebsflansch (2) anvulkanisiert ist, wobei die Längsverzahnungen der beiden letztgenannten jeweils aus Blech gefertigt sind.

2. Antriebsvorrichtung nach Anspruch 1,
**dadurch gekennzeichnet, dass**
die in Längsrichtung der Zähne (6, 7) sich vergrößernden bzw. verkleindernden Zahnquerschnitte über eine solche Zahnbreitenänderung der Längsverzahnungen der Wellen-Nabenverbindung erreicht werden, die bei der Drehmomentübertragung selbsthemmend ist bezüglich einer Lösekraft.

## Claims

1. A drive connection for torque transmission along the line of drive shafts of a motor vehicle between a crankshaft (1) and a driving flange (2) of a casing (4), coaxial with the crankshaft (1) and axially movable relative thereto, of a hydrodynamic torque converter formed with longitudinal teeth (6, 7) which increase or decrease in cross-section in the longitudinal direction and are pressed into one another without clearance by an axial force in the axial direction generated by the pressure inside the torque converter,
**characterised in that**
the longitudinal teeth (7) associated with the crankshaft (1) are provided on the hub of a supporting plate (18) fastened to the crankshaft (1) and on a certain diameter of the hub, whereas the longitudinal teeth (6) associated with the casing (4) of the hydrodynamic torque converter are formed on the drive flange (2), and a force-transmitting elastomer layer (5) contributing to freedom from torque is vulcanised on the supporting plate (18) or on the drive flange (2) between the flanks (12) of the teeth (7) associated with the crankshaft (1) and the flanks (13) of the teeth (6) associated with the casing (4), wherein the longitudinal teeth on both the last-mentioned components are made of sheet metal.

2. A drive device according to claim 1, **characterised in that** tooth cross-sections which increase or decrease in the longitudinal direction of the teeth (6, 7) are obtained over a variation in width of the longitudinal teeth on the shaft-hub connection such that the connection is self-locking as regards any loosening force during torque transmission.

## Revendications

1. Liaison d'entraînement pour la transmission de couple dans la ligne de transmission d'un véhicule entre un vilebrequin (1) et une bride d'entraînement (2) d'un boîtier (4) d'un convertisseur hydrodynamique de couple, coaxial au vilebrequin (1) et coulissant axialement par rapport à celui-ci, comportant des dentures longitudinales dont les dents (6, 7) ont une section diminuant ou augmentant dans la direction longitudinale et sont poussées sans jeu l'une contre l'autre dans la direction axiale par la force axiale engendrée par la pression à l'intérieur du convertisseur,
**caractérisée en ce que**
la denture longitudinale associée au vilebrequin (1) comportant des dents (7), est prévue sur un moyeu d'une tôle de support (18) fixé au vilebrequin (1), sur un certain diamètre de celui-ci, alors que la denture longitudinale munie des dents (6) associées au convertisseur hydrodynamique de couple est prévue sur la bride d'entraînement (2), et entre les flancs (12) des dents (7) associées au vilebrequin (1) et les flancs (13) des dents (6) associées au boîtier (4), on a une couche d'élastomère (5) transmettant les efforts, éliminant le jeu, cette couche étant prévue sur la tôle de support (18) ou sur la bride d'entraînement (2) en étant fixée par vulcanisation, les dentures longitudinales de ces deux dernières dentures étant en tôle.

2. Liaison d'entraînement selon la revendication 1,
**caractérisée en ce que**
la section des dents qui augmente ou diminue dans la direction longitudinale des dents (6, 7) s'obtient par une variation de largeur des dents longitudinales de la liaison arbre-moyeu telle que lors de la transmission du couple la liaison est autobloquante par rapport à une force d'ouverture.
